(19) Europäisches Patentamt / European Patent Office / Office européen des brevets

(11) **EP 2 789 443 A2**

(12) **EUROPEAN PATENT APPLICATION**

(43) Date of publication:
**15.10.2014 Bulletin 2014/42**

(51) Int Cl.:
**B29B 17/02** (2006.01)      **B29B 17/04** (2006.01)
**B02C 23/10** (2006.01)      **B02C 18/22** (2006.01)
**B29B 13/10** (2006.01)

(21) Application number: **14162867.7**

(22) Date of filing: **31.03.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.04.2013 IT RE20130025**

(71) Applicant: **ISOL-ECO Societa' a Responsabilita' Limitata**
**42049 Sant'Ilario d'Enza, Reggio Emilia (IT)**

(72) Inventor: **Furin, Daniele**
**42021 Bibbiano (Reggio Emilia) (IT)**

(74) Representative: **Corradini, Corrado et al**
**Ing. C. Corradini & C. S.r.l.**
**Via Dante Alighieri 4**
**42121 Reggio Emilia (IT)**

(54) **A plant for recycling plies and rubber of used tyres for manufacturing products made of insulating material**

(57)    An embodiment of the present invention discloses a plant for recycling plies and rubber of tyres, comprising at least a first device (100) which comprises a breaker roller (125) provided with tapered projections (130); a casing (115) for accommodating and cladding the breaker roller (125); a bin (105) communicating with the internal volume of the casing (115) and able to be loaded with a material containing rubber bonded to the plies of tyres; a mobile pusher (140) able to push the material internally of the casing (115) against the breaker roller (125); and at least a sieve (150) located vertically below the breaker roller (125). A further embodiment further provides a method and a plant for manufacturing products made of insulating material (P), using for example the plies of tyres separated by means of the preceding plant.

FIG.1

EP 2 789 443 A2

## Description

The present invention relates to a plant for recycling plies and rubber from used tyres, as well as a method and a plant that can use the plies recovered for manufacturing insulating material, in particular panels that function as heat and sound insulation in both construction and other industries.

Heat and sound insulation is usually realized by means of application of at least two panels, of which a heat-insulating panel having mainly properties of heat insulation and a sound-absorbent panel mainly have sound insulating properties. Heat-insulating panels are generally realised with a different material with respect to sound-absorbent panels. For example, heat-insulating panels can be made of wood, polystyrene, polyurethane or polystyrol, while sound-absorbent panels can be made of polyethylene, rubber, cork or natural fibres.

In other cases, heat insulating panels and sound-absorbent panels can also be made using a same material, but in different physical states. For example, heat-insulating panels can be made of open-cell foam polystyrene while sound-absorbent panels can be made of compressed polyurethane.

In both cases, a drawback connected to this type of heat and sound insulation consists in the fact of generally having a rather high cost, due both to having to buy two different types of insulating panels and then lay them.

To obviate this drawback, panels have been made which can contemporaneously perform both an effective heat insulation and an effective sound insulation, using a material comprising a polymer matrix in which a fibrous mass is incorporated, for example a mass of natural and/or synthetic textile fibres.

The textile fibre used for manufacturing this type of panel can be obtained from recycling of used tyres, for example by means of a process comprising reducing and mixing the used tyres, in such a way as to separate the ply from the majority of the rubber connected thereto, and thus use the retrieved ply for manufacturing the above-mentioned heat and sound insulating panels.

A drawback of this recycling system of the tyres consists however in the fact that the ply often remains bonded, even in small quantities, to rubber which therefore enters and becomes part of the heat and sound insulating panel.

Owing to the presence of this residue of rubber, the panel made in this way can be dangerous in cases of fire, as when the rubber burns it produces cyanuric acid, which is toxic for humans.

A further drawback consists in the fact that the rubber granules that remain imprisoned in the ply of the tyres is substantially consumed, while it might have a much higher commercial value if recycled and used in other ways.

An aim of the present invention is therefore to disclose a plant for recycling the ply and the rubber from tyres, which enables total, or almost-total separation of the two components.

A further aim of the present invention is to disclose a method and a plant for realising panels or other insulating products with a material that comprises a polymeric matrix in which a fibrous mass is incorporated, for example a fibrous mass comprising the plies of the tyres recycled using the above-mentioned plant. A further aim of the present invention is that it attains the above-mentioned objectives with a solution that is simple, rational and relatively inexpensive. These and other aims are attained by the characteristics of the invention as reported in the independent claims. The dependent claims delineate preferred and/or particularly advantageous aspects of the invention.

In particular, an embodiment of the present invention discloses a plant for recycling plies and rubber from tyres, comprising at least a first device which comprises:

a breaker roller provided with tapered projections;
a casing which can accommodate and clad the breaker roller;
a bin communicating with an internal volume of the casing and loadable with a material containing rubber attached to tyre plies;
a mobile pusher that can push the material internally of the casing against the breaker roller, and
at least a sieve located vertically below the breaker roller

With this solution, the material introduced into the bin is finely grated by the breaker roller, obtaining a high degree of separation from the ply, the majority of which is retained internally of the first device of the sieve, with respect to the rubber, a majority of which rubber exits from the calibrated openings of the sieve, then to be appropriately collected.

In a preferred aspect of the invention, the first device can further comprise a shaker roller orientated parallel to the breaker roller and arranged internally of the bin at the upper edge of a passage opening which connects the internal volume of the bin with the internal volume of the casing in which the breaker roller is housed.

In this way, the shaker roller prevents the pressure exerted by the punch from forming a cap of too-compact material against the breaker roller, which would obstruct functioning thereof.

In a further preferred aspect of the invention, the tapered projections of the breaker roller can be distributed helically about the axis of the breaker roller.

In this way, the fraction of material (a majority of which being ply with some small rubber residue) which is retained by the sieve of the first device is pushed by the rotation of the breaker roller to advance in an axial direction so as to be treatable in other devices of the plant.

For this purpose, in a preferred aspect of the invention the plant can include also a second device, comprising:

> a casing able to receive the fraction of material retained by the sieve (150) of the first device;
> a rotating shaft located internally of the second casing and provided with a plurality of radial blades;
> at least a sieve located vertically below the rotating shaft.

With the action of the radial blades associated to the rotating shaft, the material coming from the first device is further missed, defibred and reduced, to the point of obtaining a practically clean tyre ply, which is retained internally of the second device of the sieve, and a rubber residue (with a small percentage of ply) which exits from the calibrated openings of the sieve, then to be collected.

In a preferred aspect of the invention, the second device can also comprise a plurality of blades fixed to the casing and projecting radially internally, each of which is interposed between two consecutive radial blades of the rotating shaft.

In this way, the blades fixed to the casing behave as combs which interact with the radial blades associated to the rotating shaft, further improving the separation of the ply.

In particular, with this system 99.9% of the rubber originally bonded to the ply can be eliminated.

In a further aspect of the invention, the radial blades associated to the rotating shaft are distributed helically about the axis of the rotating shaft.

In this way, the practically-cleaned ply retained by the sieve of the second device is pushed by the radial blades of the rotating shaft to advance axially in order to be directed towards an outlet mouth through which it is collected.

As previously mentioned, the fraction of material passing through the sieves of the first and second device mostly comprise rubber with - still - a small residue of ply.

To clean the rubber further from this ply residue, in a preferred aspect of the invention the plant can also include a third device able to receive the fraction of material which is allowed to pass through the sieves of the first and second devices, the third device comprising:

> a plurality of vibrating sieves arranged aligned to one another such that the material advances from one to another in succession, and
> at least a shaker roller interposed between two consecutive sieves of the vibrating sieves.

Naturally the vibrating sieves of the third device might also be more than two in number, of which two arranged in succession and, between each pair thereof, a respective shaker roller might be interposed.

With this solution, the shaking to which the material is constantly subjected by the vibrating sieves and the shaker rollers advantageously enables further separation of the ply from the rubber.

In a preferred aspect of the invention, the third device also comprises aspirating means located above the vibrating sieves.

In this way, the aspirating means enable sucking back the ply, which is lighter, gradually leaving only the rubber component on the vibrating sieves.

In a further preferred aspect of the invention, the third device further comprises means for blowing jets of air below the vibrating sieves.

These air jets have the advantage of increasing the mixing of the material on the vibrating sieves, thus improving the separation of the ply from the rubber, which thus becomes almost totally clean.

In a further aspect of the invention the plant can lastly comprise a fourth device, which can receive the fraction of material the sieves of the third device have allowed to pass, and sub-divide the material on the basis of different particle size. For example, the fourth device can comprise:

> a casing able to receive the fraction of material retained by the sieve of the third device; and
> a plurality of rotating sieves arranged internally of the casing, superposed on one another and having openings of different dimensions.

In this way, the totally-cleaned granules of rubber exiting from the calibrated openings of the sieve of the third device can be selected by the fourth device on the basis of the particle size thereof, then to be packed and returned on the market as first-grade material.

The rubber and ply material which cannot be completely separated can be used in other ways, for example for production of innovative asphalts or can be added to hydraulic blocks.

In a further embodiment of the present invention a method is provided for manufacturing products made of insulating material, comprising steps of:

> preparing a mixture comprising fibrous material and at least a watery suspension of a polymer,
> pouring a batched quantity of the mixture internally of a mould provided with at least a forming cavity having, in negative shape, the shape of the product to be manufactured,
> closing the forming cavity of the mould with a lid,
> heating the mixture contained internally of the closed mould such as to cause hardening thereof,
> removing the lid from the mould, and
> extracting the product thus obtained from the mould.

In this way products of insulating material are manufactured simply and effectively, with a solution that is easily industrialisable with relatively modest costs.

The above products are preferably made in the form of panels, i.e. bodies having a dimension (thickness) that is significantly lower than the other two dimensions thereof (length and breadth).

In an aspect of the invention, the polymer present in watery dispersion in the mixture can be an acrylic styrene polymer.

In a further aspect of the invention, the fibrous material present in the mixture can comprise nylon, rayon and polyester fibres.

With this composition of the mixture, the product obtained with the method of the invention has excellent properties both of heat insulation and acoustic insulation. In particular, it can be demonstrated that a panel manufactured with the mixing exhibits a heat conductivity ($\lambda$) of about 0.040, and an acoustic absorption quantifiable as about 16 db for a panel thickness of 2.5 cm, and about 21 db for a panel thickness of 8 cm.

In an aspect of the invention, the fibrous material present in the mixture can comprise ply from recycled tyres.

It is known that tyres usually comprise an elastic covering made of hard rubber that covers or incorporates a ply made of textile fibres, typically fibres of nylon, rayon and polyester, and two steel rods incorporated into the bead of the rubber tyre.

The method of the invention can therefore include removing the steel present in the tyres, grinding the tyres, subsequently separating the ply from the rubber, and lastly using the textile fibres of the ply in the preparation of the mixture with which the product of insulating material is subsequently manufactured.

In particular, the fibrous material used in this process can be or can comprise in varying proportions the ply of tyres which is recycled by means of the plant described in the foregoing.

In this way a double important advantage is attained: firstly, the manufacturing of the product is extremely economical as recycled prime materials are used; secondly a valid system is provided for eliminating the used tyres.

Further, as the removal of the rubber from the ply of the tyres is almost complete, the product is safe in case of fire as it does not produce cyanuric acid.

In a preferred aspect of the invention, the method includes subjecting the mixture to a pressing step in the mould, before closing the forming cavity with the cover. This pressing step, definable also as the first pressing step, is advantageous as it enables uniformly distributing the mixture internally of the forming cavity, beginning the taking-on thereof of the manufactured product to be obtained.

By way of example, this first pressing step can be carried out by subjecting the mixture to a pressure comprised between 50 and 60 bar, for example by means of a punch entering substantially snugly in the forming cavity of the mould.

In a further aspect of the method of the invention the mixture is subjected to a further pressing step internally of the mould, after having closed the forming cavity with the lid.

This pressing step, definable also as the second pressing step, enables compacting the mixture internally of the forming cavity and impressing thereon the definitive shape of the product to be obtained.

By way of example, this second pressing step can be carried out by subjecting the mixture in the forming cavity to a pressure comprised between 95 and 105 bar.

The second pressing step can be carried out by using, for example, a lid which is able to slidably insert in the forming cavity of the mould, and press the mixture which is internal thereof.

In a different aspect of the invention, the step of heating the mixture can be obtained by locating the closed mould internally of an oven, for example a microwave or gas oven.

In this way the heating, or "firing" of the mixture is done simply and rapidly.

For this purpose it is preferable for the mixture to be heated to a temperature of not lower than the vitrification temperature of the watery suspension of the polymer contained therein.

In a further embodiment of the present invention a plant is provided for manufacturing products made of insulating material, which comprises:

means for preparing a mixture comprising fibrous material and at least a watery dispersion of a polymer, and

a work line comprising a plurality of work stations which include at least:

a loading station provided with means for pouring a batched quantity of the mixture internally of a mould provided with at least a forming cavity having, in negative shape, the form of the product to be manufactured,
a closing station provided with means for closing the forming cavity (505) of the mould with a lid,
a firing station provided with means for heating the mixture contained internally of the closed mould so as to cause hardening of the mixture,
an opening station provided with means for removing the lid of the mould, and an extracting station provided with means for extracting the product thus obtained from the mould.

The advantages of this plant are substantially the same as the above-described method, among which in particular the advantage of obtaining products made of insulating material with a solution that is simple, rational and relatively inexpensive.

In an aspect of the present invention, the work stations of the work line can further include a pressing station provided with means for pressing the mixture internally of the mould before the closure of the forming cavity with the lid.

In this way, the plant is advantageously suitable for carrying out the first pressing step of the mixture as described in the foregoing.

In a further aspect of the present invention, the work stations of the work line can also include a pressing station provided with means for pressing the mixture internally of the mould after the closure of the forming cavity with the lid.

In this way, the plant is advantageously suitable for carrying out the second pressing step of the mixture.

In a further aspect of the invention the work stations of the work line can also include a washing station provided with means for washing the mould, so that the mould can be used a plurality of times.

The above-described plant can naturally comprise also automated movement means for transferring the mould in succession among the work stations of the work line.

Lastly, the plant can comprise other automated movement means for transferring the lid from the opening station to the closing station of the mould, possibly passing it into a washing station provided with means for washing the lid.

Further characteristics and advantages of the invention will emerge from a reading of the description that follows, provided by way of non-limiting example, with the aid of the figures of the accompanying tables of drawings.

Figure 1 is a schematic lateral view of an apparatus belonging to a plant for recycling used tyres, in an embodiment of the present invention.
Figure 2 is the section along line II-II of figure 1.
Figure 3 is the section along line III-III of figure 1.
Figure 4 is the section along line IV-IV of figure 1, shown in larger scale.
Figure 5 is a schematic lateral view of a third device of the above plant for recycling used tyres.
Figure 6 is the section along line VI-VI, shown in larger scale.
Figure 7 is a lateral view of a fourth device of the above plant for recycling used tyres.
Figure 8 is a plan view of the device of figure 7.
Figure 9 is a diagram illustrating, in plan view, a work line for manufacturing of insulating panels according to a further embodiment of the present invention.

Figures from 1 to 8 denote in its entirety a plant for recycling used tyres. Used tyres, as is known, comprise an elastic covering made of a hard rubber which covers or incorporates a textile made of textile fibres, typically nylon, rayon and polyester (normally the polyester fibres of the textile are polyethylene terephthalate), and a series of steel rods sunken into the beads of the rubber coverings.

The disposal of tyres normally includes removing the steel rods and then grinding the tyres, resulting in a material mixture of rubber and plies.

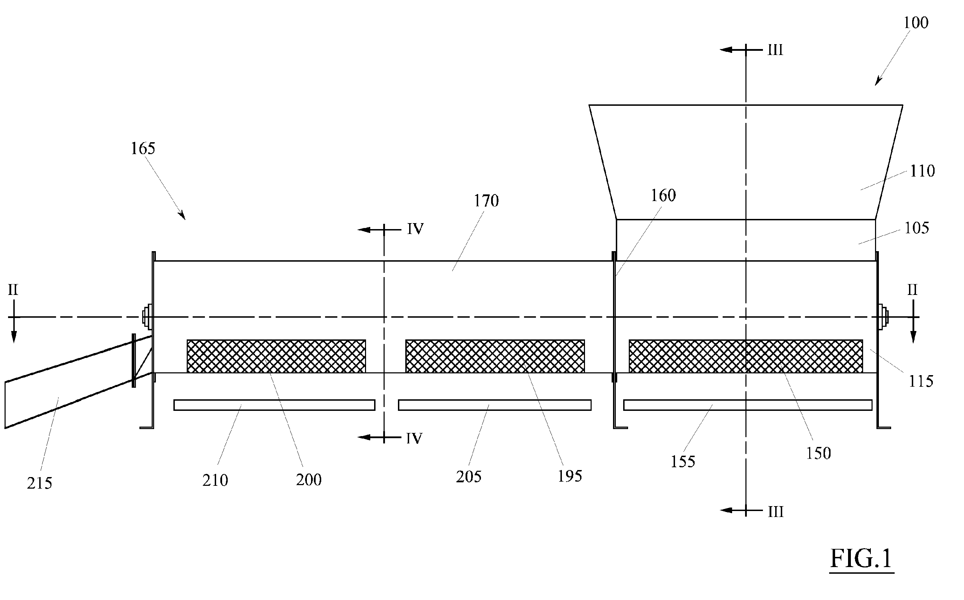

The plant illustrated in figures 1 to 8 enables separating the rubber from the plies in this mixed material.

The plant primarily comprises a grinder device 100 (see figures 1-3). The grinder device 100 comprises an internally hollow bin 105, which is provided with a loading hopper 110 through which the internal volume of the bin 105 can be filled with a material containing plies of tyres to which rubber granules are bonded. In the example shown, the feed hopper 110 is defined by an inclined plate placed inside a shell plating to substantially vertical walls.

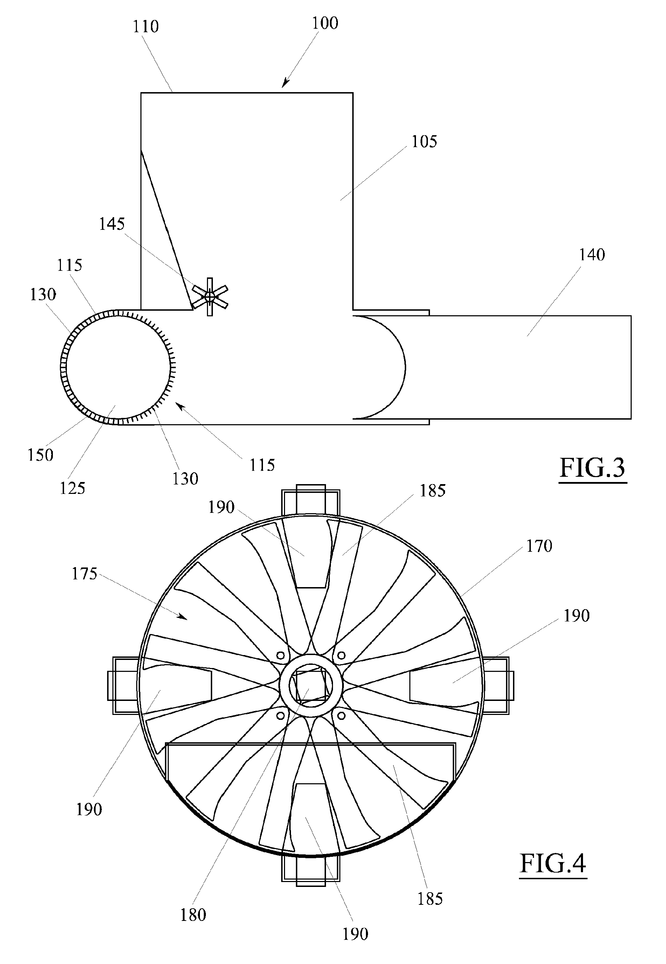

A casing 115 is associated to the bin 105, the casing 115 having a substantially cylindrical shape and a horizontal axis, which is in communication with the internal volume of the bin 105 via a passage opening 120 (see figure 3). The casing 115 can be housed in single body with the bin 105, or can be fashioned separately and fixed by means of suitable connecting means, for example it can be welded or bolted.

A substantially cylindrical breaker roller 125 is coaxially housed inside the casing 115, a lateral surface of which breaker roller 125 is provided with a plurality of tapered projections 130. The overall diameter of the breaker roller 125 (including the tapered projections 130) is substantially equal to, or slightly less than, the inside diameter of the casing 115. The tapered projections 130 exhibit a rather limited height (with respect to the cylindrical surface of the breaker roller 125), of the order of 1-1.5 cm.

The tapered projections 130 can be realized in any way possible, as sharp bodies (for example nails or wedges), which are fixed to the lateral surface of the breaker roller 125, or as portions of the breaker roller 125 which are engraved and bent radially outwards in the manner of a grater. In each case, the breaker roller 125 and the relative tapered projections 130 are preferably made of a metal material, for example steel.

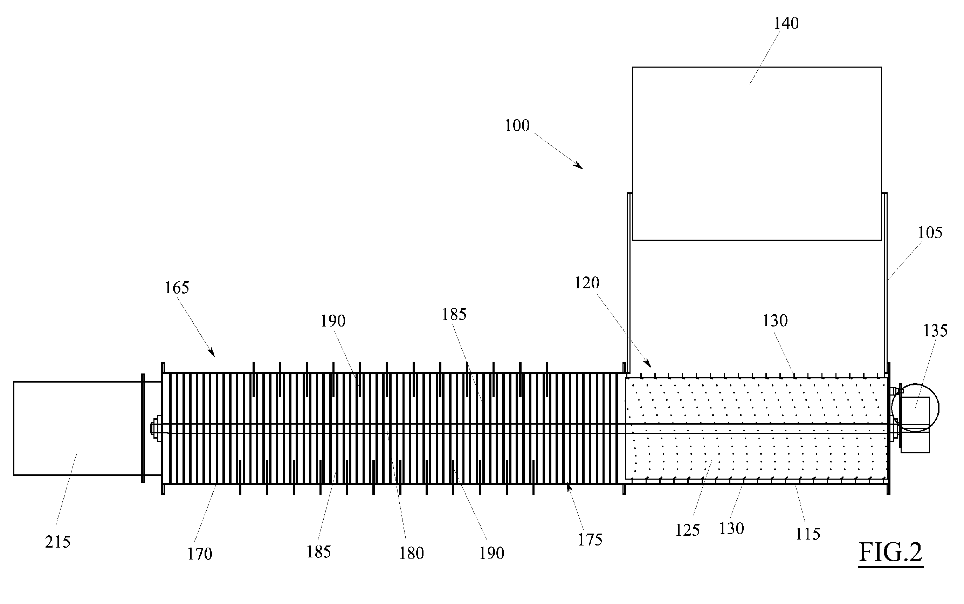

The breaker roller 125 is rotatably supported inside the casing 115 by suitable bearings (not shown), and is connected to an actuating motor 135 (see figure 2), for example an electric motor, which rotates on itself at high speed.

Inside the bin 105, in front of the passage opening 120 that leads into the casing 115, the grinder device 100 further comprises a pusher or punch 140, which is moved in a rectilinear to and fro reciprocating motion with respect to the breaker roller 125. In particular, the punch 140 moves along a rectilinear direction which is perpendicular to the rotation axis of the breaker roller 125, pushed by suitable actuating means (not shown).

As illustrated in figure 2, the plan dimensions of the punch 140 are such as to substantially close the lower mouth of the hopper 110, while the cross section thereof exhibits substantially the same shape and dimensions as the passage opening 120 which connects the bin 105 with the casing 115.

In this way, during the advancing strokes, the punch 140 can push the material contained internally of the bin 105 into the casing 115 against the breaker roller 125, while during the return strokes, the punch 140 opens the loading hopper 110, enabling new material to fall by gravity inside the tank 105.

In order, during the advancing strokes, to prevent excess material contained in the loading hopper 110 above the passage opening 120 from being compacted and hindering the movement of the punch 140, the device 100 also includes a shaker roller 145.

As illustrated in figure 3, this shaker roller 145 is contained internally of the bin 105, orientated parallel to the breaker roller 125 and positioned at the upper edge of the passage opening 120 that leads into the casing 115. The shaker roller 145 can develop over the entire width of the passage opening 120, and can comprise a central shaft to which a plurality of radial blades are fixed. The shaker roller 145 is further associated to a suitable motor (not shown), for example an electric motor, which rotates the shaker roller 145 on itself during the rotation of the breaker roller 125 and the advancement of the punch 140. In this way, the material contained in the bin 105 at a higher level than the punch 140 is continuously mixed and broken up, so that does not form a compact agglomeration that would impede the advancing of the punch 140. The material moved by the shaker roller 145 then falls onto the upper surface of the punch 140, so that it can drop down onto the bottom of bin 105 during the subsequent return stroke.

At each advancing stroke of the punch 140, a certain amount of tyre plies bonded to the rubber are pushed inside the casing 115 against the breaker roller 125 which rotates at high speed. In this way, the tapered projections 130 of the breaker roller 125, finely grate the material, producing the detachment of a large amount of textile from the rubber contained therein.

The casing 115 is closed below the breaker roller 125 by a sieve 150, for example by a grid or by a surface provided with calibrated openings, which is able to retain the plies inside the casing 115 and let the rubber pass through, which rubber is collected by gravity on a conveyor belt 155 located below the sieve 150 (see figure 1).

The material that remains inside the casing 115 is pushed to move axially towards an outlet mouth 160. This movement of the residual material is facilitated by the tapered projections 130, which can be distributed in a spiralled manner on the lateral surface of the breaker roller 125, so that the rotation of the breaker roller 125 also produces a thrust in the axial direction on the material in the casing 115. At the outlet mouth 160 thereof the grinder device 100 can include means (not shown), for example combs, able to clean the tapered projections 130 of the breaker roller 125 of any residual entangled material.

A mixing device 165 is joined to the outlet mouth 160 of the cylindrical casing 115, which can receive the material retained by the sieve 150 of the grinder device 100.

The mixing device 165 comprises a casing 170 which is also substantially cylindrical in shape. The casing 170 can have substantially the same diameter as the casing 115 and can be connected coaxially thereto, joined frontally to the outlet mouth 160, so that the material retained by the sieve 150 can flow automatically into the mixing device 165. A central shaft 180 is coaxially and rotatably accommodated Inside the casing 170, to which a plurality of radial blades 185 are attached that develop up to almost touching the internal surface of the casing 170 (see figure 4). The central shaft 180 is connected to an actuating motor, for example the same motor 135 which actuates the breaker roller 125 or a separate motor, so as to be able to rotate the radial blades internally of the casing 170. The mixing device 165 also comprises a plurality of fixed blades 190, which are fixed to the casing 170 and project radially inward, so that each of them is interposed between two consecutive radial blades 185 of the central shaft 180. In this way, the reciprocal movement between the radial blades 185 and the blades 190, due to the rotation of the central shaft 180, produces a combing action that stretches and frays the plies in arrival from the grinder device 100, detaching the last portion of the rubber associated thereto.

Below the central shaft 180 and the radial blades 185, the casing 170 is closed by a pair of sieves 195 and 200, for example a pair of grids or at least a pair of surfaces equipped with calibrated openings, which can retain the clean plies and let the rubber pass though, which rubber is collected by gravity on two conveyor belts 205 and 210 that are individually arranged below a respective one of the sieves 195 and 200.

The cleaned plies withheld from the sieves 195 and 200 are instead pushed axially towards the opposite end of the casing 170, where there is an unloading and recovery chute 215. This axial movement of the plies is produced by the radial blades 185, which are preferably distributed in a spiraled manner around the central shaft 180. In practice, the radial blades 185 are arranged in succession, one after the other, along the axial development of the central shaft 180 and are angularly staggered with respect to one another, all in the same direction, for example clockwise, so as to envelop the central shaft 180 substantially like a screw. In this way, the rotation of the central shaft 180 produces not only fraying of the plies, but also a thrust in the axial direction of the plies towards the unloading chute 215.

Thanks to the grinder device 100 and to the mixing device 165 described above, the plies that exit the unloading chute 215 are practically devoid of any residual rubber (up to a degree of cleanliness of 99.9%). The material collected on the conveyor belts 155, 205 and 210 is instead composed mostly of rubber, to which, however, small residues of the plies might still be bonded.

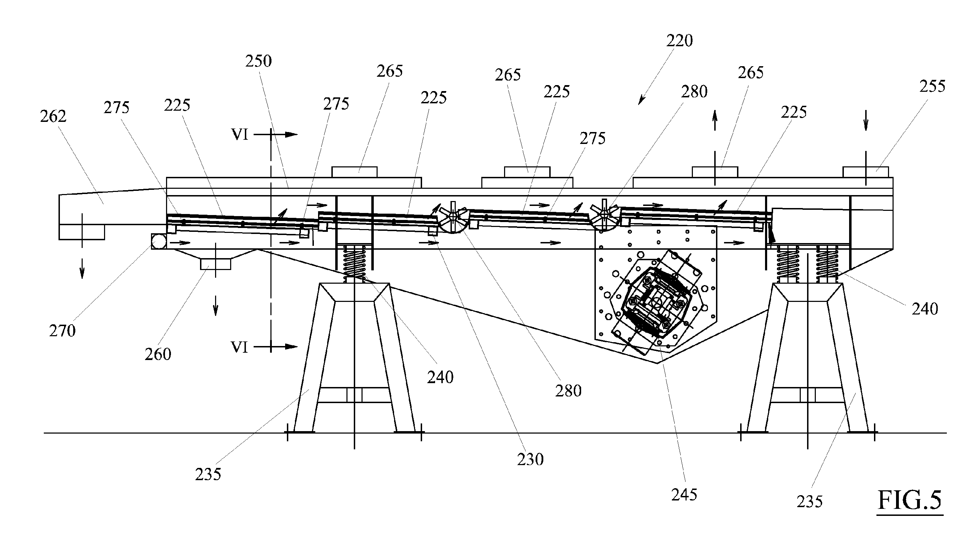

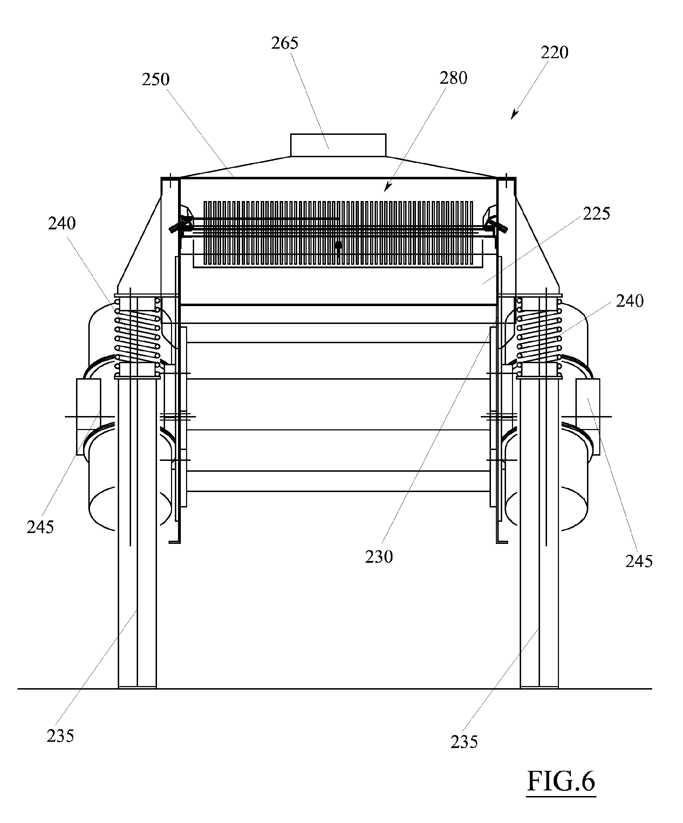

The conveyor belts 155, 205 and 210 then transfer the material to a third device 220 of the plant, which is illustrated in figures 5 and 6.

The device 220 comprises a series of vibrating sieves 225, in this case four in number, which are orientated horizontally or slightly inclined, and are arranged in succession one alongside another, so as to form a row. Each vibrating sieve 225 can comprise for example a grid or in any case a surface provided with calibrated openings, which is positioned on a vibrating structure 230 that is maintained in support on one of the pedestals 235 with the interposing of springs 240. Two mechanical vibrators 245 are installed on the vibrating structure 230, for example of the type with eccentric masses, which are actuated by a respective motor, so as to produce vibrations that are transmitted to the vibrating structure 230, and then to the sieves 225.

The vibrating sieves 225 are enclosed within a casing 250, which affords an inlet 255 for the material coming from the conveyor belts 155, 205 and 210. The inlet 255 is positioned above a first vibrating sieve 225, at an end of the row. The casing 250 also affords a first outlet 260 for the clean rubber, which is positioned below the last vibrating sieve at the opposite end of the row. The casing 250 finally affords a second outlet 262 for the material that it has not been possible to separate, which is located downstream of the row of vibrating sieves 225, so as to receive the material that remains above them.

The device 220 further comprises an aspirating system (not completely shown), which is adapted to create a suction effect above the vibrating sieves 225. The aspirating system comprises in general a vacuum pump (not shown), which is connected with the internal volume of the housing 250 through a series of mouths 265 positioned on the lid of the housing 250 above the vibrating sieve 225, thus creating inside a depression which tends to suck the material upwards. The device 220 further comprises a blowing system (not completely shown), which is adapted to blow air from below the vibrating sieve 225 upward. This blowing system schematically comprises an air manifold 270, which is connected with a pump (not shown) and with a plurality of transversal arrays of mouths 275 facing upward, which are installed below the vibrating sieves 225.

Lastly, the device 220 comprises a pair of shaker rollers 280, each of which is interposed between two consecutive vibrating sieves 225 of the row. The shaker rollers 280 are arranged horizontally, with the axes thereof orientated transversally with respect to the development of the row of vibrating sieves 225. In particular, each shaker roller 280 can extend for the entire width of the vibrating sieves 225 (see also figure 6), and can comprise a central shaft to which a plurality of radial vanes or blades is fixed. The shaker rollers 280 are further associated to a suitable motor (not shown), for example an electric motor, which can rotate them about themselves at high speed.

In use, the vibrating sieve 225, the suction system, the blowing system and shaker rollers 280, are operated simultaneously. The material coming from the conveyor belts 155, 205 and 210 is fed into the device 220 through the inlet 255. In this way, the material rests initially on the first vibrating sieve 225 of the row then to proceed, due to the vibration, towards the last vibrating sieves 225. During this advancement, the material is continuously mixed and agitated by the shaker rollers 280 and the jets of air blown through the mouths 275 located in the vibrating sieves 225. In this way, the last remnants of plies that are still in the tyre rubber are further separated and untangled. These lighter residues of tyre ply are then aspirated by the intake system through the mouths 265 and collected for example by a cyclone separation system (not illustrated). The plies thus-collected can lastly be joined to the plies from the unloading chute 215 of the previous mixing device 165, to be used in subsequent processing, for example in the manufacture of insulation panels as will be described below. The rubber, however, being heavier, remains resting on the vibrating sieve 225 and is sifted thereby. The material that remains on the vibrating sieve 225 up to reaching the exit 262 is an inseparable rubber and ply agglomerate that can be used for the production of innovative asphalts or added to hydraulic blocks. The rubber granulate that pass through the vibrating sieve 225 is, on the other hand, almost devoid of canvas and is collected through the outlet 260.

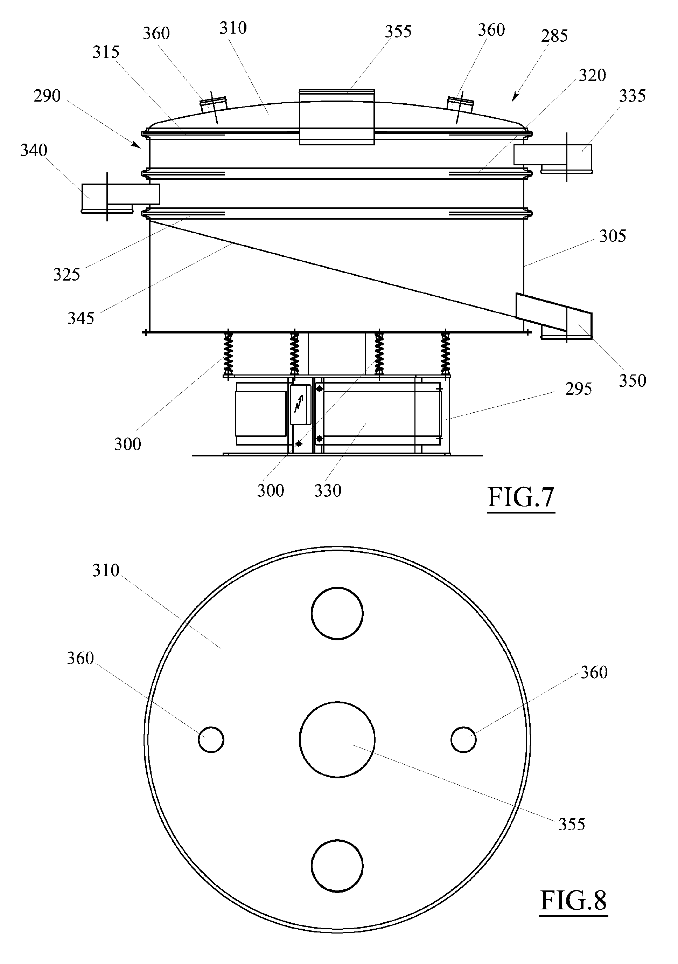

At this point, the cleaned rubber granulate from the outlet 260 is then sent to a sorting device 285, shown in figure 7, which is adapted to divide the rubber according to different levels of particle size. In the example shown, the selector device 285 comprises an external casing 290, which can be supported on a base 295 via a series of suspensions 300. The external casing 290 is defined by a lower hollow cylinder 305 with a vertical axis, closed at the top by a lid 310. A perforated disc 315 is interposed between the lid 310 and the cylinder 305, which perforated disc 315 is able to subdivide the internal volume of the casing 290 into an upper chamber and a lower chamber. Two horizontally-arranged rotating sieves 320 and 325 are arranged in the lower chamber, superposed on one another and able to rotate on themselves about the central axis of the cylinder 305. Each of these sieves 320 and 325 can be defined by a grid, or in any case by a surface provided with openings of calibrated dimensions. The sieves 320 and 325 can be rotated by a motor 330 positioned in the base 295. In general, the superiorly-positioned sieve 320 exhibits meshes or larger openings than the inferiorly-positioned sieve 325. In this way, a chamber is defined between the perforated disc 315 and the sieve 320 which chamber can retain a rubber granulate having relatively large size, while a chamber is defined between the upper sieve 320 and the lower sieve 325 that can retain a rubber granulate of a smaller size. Each of the two chambers is then provided with an unloading mouth of the rubber granulate, respectively 335 and 340, which is formed on the outer skirt of the cylinder 305. Below the lower sieve 325, the selector device 285 also includes a chute 345 for conveying the rubber granulate of very small dimensions, which crosses both rotating sieves 320 and 325, to a third unloading outlet 350 also fashioned in the cylindrical body 305.

The following are formed on the lid 310 of the selector device 285: a central conduit 355 for inlet of the rubber to be sieved, which leads directly into the chamber between the perforated disc 315 and the first rotating sieve 320, and a pair of mouths 360 opening instead into the chamber defined above the perforated disc 315, which can be be connected to an aspirating system (not shown).

In this way, the rubber granulate in arrival from the outlet 260 of the previous device 220 is introduced into the selector device 285 through the central conduit 355, and is then sieved with the rotating sieves 320 and 325. During this sieving, the aspirating system can be put into operation, in order to recover through the mouths 360 the minimum amount of tyre plies that might have manage to pass through the previous devices. Thanks to the rotating sieves 320 and 325, the rubber granulate finally exits from the unloading mouths 335, 340 and 350 perfectly clean and divided by particle size, so that it can be subsequently bagged and placed on the market as raw material.

A further embodiment of the present invention discloses a method for the manufacture of insulating panels.

This method involves initially preparing a mass (F) of fibrous material. The fibrous material (F) preferably comprises fibres of nylon, rayon and polyester. Compared to the total weight (F) of the fibrous material, the amount by weight (F') of the sun nylon fibres is preferably between 1 % and 30%:

$$F' = 1\% - 30\% F \,.$$

Compared to the total weight (F) of the fibrous material, the amount by weight (F") of only the rayon fibres is preferably between 10% and 50%:

$$F'' = 10\% - 50\% F \,.$$

The polyester fibres are preferably polyethylene terephthalate fibres, and their quantity in weight (F''') obviously depends on the amount of nylon (F') and rayon (F") fibres according to the relation:

$$F''' = F - F' - F'' \,.$$

In an important aspect of this embodiment of the invention, the fibrous material (F) can be completely formed, or comprise at least in part, the tyre plies recovered with the aid of the above-described plant, in the present case through the unloading chute 215 of the mixing device 165 of figure 1 and by the aspirating systems of the devices 220 and 285 respectively of figures 5 and 7.

In the manufacturing of the panels, the fibrous material (F) is then mixed with a watery dispersion (L) of one or more polymers which act as binders, so as to obtain a mixture (M) according to the following basic formula expressed in weight:

$$M = F + L \,.$$

The watery dispersion (L) is generally formed by solid particles of polymer dispersed in water.

The amount by weight of the watery dispersion (L) in the mixture (M) is preferably less than the amount by weight of the fibrous material (F).

In particular, the amount of the watery dispersion (L) can be comprised between 0.5% and 50% of the total weight (F) of fibrous material:

$$L = 0.5\% - 50\% F \,.$$

Preferably, the amount by weight of the watery dispersion (L1) is between 10% and 15% of the total weight (F) of fibrous material:

$$L = 10\% - 15\% F \,,$$

in particular, about 12% of the total weight (F) of fibrous material:

$$L \cong 12\% F \,.$$

In greater detail, the mixture (M) can comprise a single watery dispersion (L1) of a styrene acrylic polymer, i.e. according to the following formulation by weight:

$$L = L1$$

The watery dispersion (L1) can exhibit a solid content - i.e. a percentage by weight of the solid polymer particles compared to the total weight of the dispersion - of between 49% and 51%, with an average size of the solid particles of between 100 and 200nm, preferably 150nm. The watery dispersion (L1) may also exhibit a Brookfield viscosity comprised between 1000 and 5000 mPas, measured at the temperature RVT = 23°C and for a rotation velocity of $\Omega$ = 20rpm, where the Brookfield viscosity measures the force required to maintain the rotation of a disc or a cylinder with constant angular velocity $\Omega$ immersed in the fluid to be measured in temperature RVT. Lastly, the watery dispersion (L1) can have a glass-transition temperature Tg of about 33°C.

A watery dispersion of a styrene acrylic polymer having the above characteristics is provided by CRAY VALLEY under the trade name CRAYMUL 5432. In addition to said first watery dispersion (L1), the mixture (M) can comprise a further watery dispersion (L2) of a styrene acrylic polymer, according to the following formula:

$$L = L1 + L2 .$$

The amount by weight of the further watery dispersion (L2) is preferably between 0.3 % and 0.7 % of the total weight of said first watery dispersion (L1):

$$L2 = 0.3\% - 0.7\%L1 ,$$

in particular about 0.5 % of the total weight of said first watery dispersion (L1):

$$L2 \cong 0.5\%L1 .$$

The further watery dispersion (L2) can have a solid content comprised between 48% and 51%, with a mean particle size of between 200 and 300 nm, preferably 250nm, and the Brookfield viscosity can be between 50 and 200 mPas, measured at the temperature RVT = 23°C and for a rotation speed of $\Omega$=20rpm; and the temperature of vitrification Tg can be approximately 17°C.

A watery dispersion of a styrene acrylic polymer having the above characteristics is provided by CRAY VALLEY under the trade name CRAYMUL 5525. This further watery dispersion (L2) increases the plasticity of the mixture (M), i.e. the ability to retain the shape that is imposed on it during the pre-firing pressing. Alternatively, the second watery dispersion (L2) can be replaced in the mixture (M) by a different watery dispersion (L3) of a styrene acrylic polymer, according to the following formula expressed in weight:

$$L = L1 + L3 .$$

The amount in weight of the different watery dispersion (L3) is preferably between 0.1 % and 0.5 % of the total weight of the first watery dispersion (L1):

$$L3 = 0.1\% - 0.5\%L1 ,$$

in particular about 0.3% of the total weight of said first watery dispersion (L1):

$$L3 \cong 0.3\%L1 .$$

The different watery suspension (L3) can have a solid content comprised between 59% and 61%, with a mean particle size of between 300 and 400nm, preferably 350nm, and the Brookfield viscosity can be comprised between 500 and 1100 mPas, measured at temperature RVT = 23°C and for a rotation velocity of $\Omega$=20rpm, and the temperature of vitrification Tg can be approximately -10°C. A watery dispersion of a styrene acrylic polymer having the above characteristics is provided by CRAY VALLEY under the trade name CRAYMUL 5100. This different watery dispersion (L3), as well as the previous watery dispersion (L2), increases the plasticity of the mixture allowing it to maintain the post-pressing shape before firing.

To the mixture (M) can possibly also be added a certain amount of water (A), according to the following formula expressed in weight:

$$M = F + L + A .$$

The maximum amount by weight of this additional water (A) is approximately 5% of the total weight (F) of fibrous material:

$$A = \max 5\%F .$$

The mixture (M) can possibly also comprise a certain amount of powdered graphite (GR), according to the following formula expressed in weight:

$$M = F + L + (A) + GR$$

where the brackets indicate that the addition of water (A) is possible but not necessary.

The amount by weight of graphite (GR) is preferably comprised between 0.5 % and 5% of the total weight (F) of fibrous material:

$$GR = 0.5\% - 5\%F .$$

The addition of graphite (GR) has the advantage of increasing the reflective properties and thermal insulation of the final insulating panel.

The mixture (M) can possibly also comprise a certain quantity of fireproofing substances, such as ammonium sulphate, according to the following formula expressed in weight:

$$M = F + L + (A) + (GR) + I$$

where the brackets indicate that the addition of water (A) and/or the addition of graphite (GR) are possible but not necessary.

The amount by weight of fireproofing substances (I) is preferably comprised between 1.5% and 2.5% of the total weight (F) of fibrous material:

$$I = 1.5\% - 2.5\% F .$$

The addition of the fire-retardant substance (I) has the advantage of increasing the fire resistance properties of the final insulating material.

Lastly, trace amounts of other materials the mixture (M) can be optionally added to the mixture, such as waste mineral wool (rock - glass), waste plasterboard, derivatives from polymer processing, etc.

Purely by way of example, a mixture of the invention might have the following composition:

> 81.5 kg of fibrous material (F);
> 12 kg of a watery suspension of styrene acrylic polymer (L);
> 5 Kg of additional water (A);
> 1.5 kg of fireproofing substances;
> for a total of 100 kg of mixture (M).

From the point of view of the plant, the mixture (M) described above can be prepared in a closed mixer (not illustrated), into which dosed quantities of clean fibrous material are fed coming from the recovery of the tyre plies, the watery dispersion of polymers, as well as possibly each of the additional ingredients mentioned above, in order to be uniformly mixed.

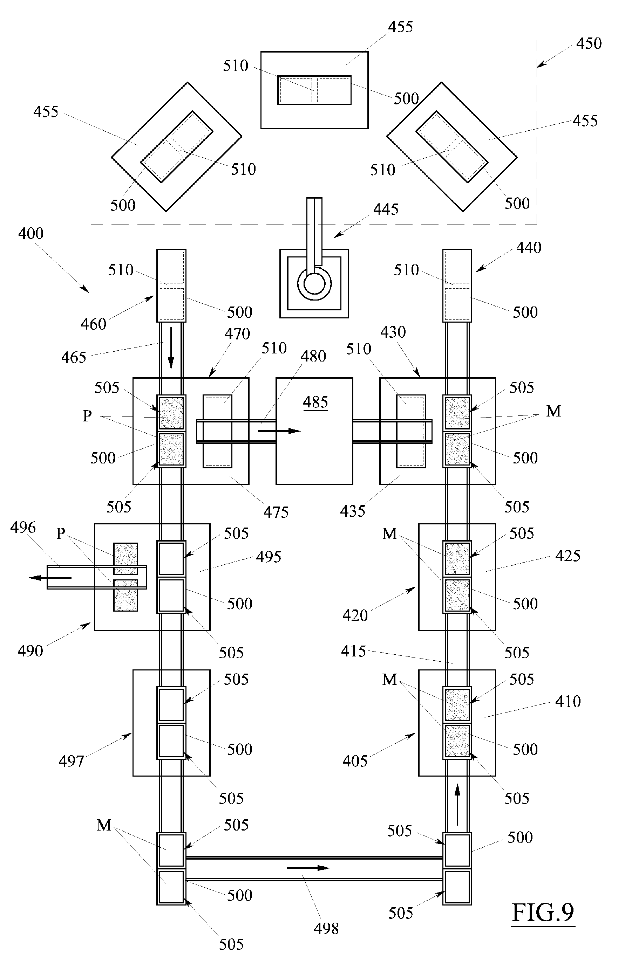

The mixture (M) thus-obtained is then used in the work line 400 illustrated in figure 9.

The work line 400 generally includes a plurality of work stations and appropriate automated handling means which successively transfer a plurality of moulds 500 between the work stations.

Each mould 500 comprises at least a forming cavity 505 having the negative shape of one of the panels to be manufactured, which is closed on the bottom while it is open at the upper face of the mould 500.

In the illustrated example, each mould 500 has two forming cavities 505 side-by-side, but it is possible that other embodiments of the mould 500 can comprise only one forming cavity 505 or vice versa, a number of the forming cavity 505 that is greater than two.

Returning now to the work line 400, the work stations comprise a first loading station 405, in which the forming cavities 505 of the mould 500 are filled with a dosed quantity of the previously-prepared mixture (M).

This loading station 405 can for example comprise a scale 410 on which the mould 500 is rested with the forming cavities 505 facing upwards, and an upper hopper (not shown), which is able to pour the mixture (M) into the forming cavity 505 up until it reaches a predetermined value by weight.

By means of a first automated handling system, in this case a conveyor belt system 415, the mould 500 is then transferred to a first pressing station 420, where the mixture (M) contained in the forming cavities 505 is pressed.

The first pressing station 420 can for example comprise a lower rest surface 425 for supporting the mould 500 with the forming cavities 505 facing upward, and an upper punch (not illustrated) which can move in the vertical sense so as to be able to slide substantially snugly in the forming cavities 505, pressing the quantity of mixture (M) present therein.

This first pressing step can be performed by subjecting the mixture (M) to a pressure of between 50 and 60 bar, and is advantageous as it enables evenly distributing the mixture (M) internally of each of the forming cavities 505, so that it begins to take on the shape of the panel to be obtained.

The mould 500 is then transferred by means of the conveyor belt system 415 to a closing station 430, in which the forming cavities 505 are closed with a lid 510.

The closing station 430 can for example comprise a lower rest surface 435 for supporting the mould 500 with the forming cavities 505 facing upward, and a robot (not illustrated) or other automated handling means that will apply the lid 510.

The lid 510 preferably includes, for each forming cavity 505, at least a portion that can be snugly inserted internally of the forming cavity 505, so that it can slide freely internally thereof at least for a certain portion.

In this way, the lid 510 can subject the mixture (M) contained in the mould 500 also to a second pressing step.

This second pressing step can be performed by subjecting the mixture (M) to a pressure of between 95 and 105 bar, preferably approximately 100 bar, and is advantageous because it enables compacting the mixture (M) within the forming cavity 505, definitively impressing the shape of the panel that is to be obtained.

It is specified that this second pressing step can be obtained thanks to the actual weight of the lid 510 itself, or, more preferably, by automatic pressing means (not illustrated) which press the lid 510 on the mould 500 up to reaching the desired pressure.

The automated pressing means can be integrated into the robot that applies the lid 510 on the mould 500 or independent means can be provided.

In the example shown, the pressing means are however located in the closing station 430, which becomes to all effects a closing and pressing station. However, in other embodiments the pressing means might also be located in a second pressing station located downstream of the closing station 430.

After the second pressing, the mould 500 closed by the lid 510 is transferred from the conveyor belt system 415 to a collecting station 440, at which a second automated handling system operates, in this case an anthropomorphic robot 445. The anthropomorphic robot 445 is configured such as to transfer the mould 500 from the collecting station 440 to a firing station 450, which can for example comprise one or more microwave and/or gas ovens 455, each of which is able to contain a certain number of moulds 500.

The mixture (M) contained in the mould 500 is subjected to a firing step internally of one of these ovens 455, causing the water present in the mixture (M) to evaporate and the particles of the polymer to bond together.

In particular, the firing step involves heating the mixture (M) to a temperature preferably higher than the glass-transition temperature Tg of the watery dispersion of the polymer, but below 300°C.

In a case where the mixture (M) contains more than one type of watery dispersion of polymer, the heating temperature should preferably be higher than the glass-transition temperature of the watery suspension, with a higher glass-transition temperature Tg.

In any case, the heating temperature is preferably between 180°C and 250°C. During the firing stage, a solid panel P is formed internally of each forming cavity 505 in which the fibrous material (F) is incorporated in a compact polymer matrix. Following this firing step, the mould 500 is then transferred by the robot 445 to the receiving station 460 of a third automated handling system, in this case a further conveyor belt system 465.

The mould 500 is transferred by means of the conveyor belt system 465, to an opening station 470, in which the lid 510 is removed so as to open the moulding cavities 505 and make the panels P contained in the mould 500 accessible.

The opening station 470 can comprise for example a lower support panel 475, able to support the mould 500 with the forming cavities 505 facing upward, and a robot (not illustrated) or other automated handling means for removing the lid 510.

The robot of the opening station 470 can transfer the lid 510 onto an automated handling system, in this case onto a conveyor belt system 480 that can transfer the lid 510 to a washing station 485.

The washing station 485 is equipped with means for performing the cleaning of the lid 510, which is then transferred from the conveyor belt system 480 newly to the closing station 430 where it can subsequently be applied to another mould 500.

Meanwhile, the open mould 500 is transferred from the conveyor belt system 465 to an extracting station 490, in which the panels P are removed from the forming cavity 505.

The extracting station 490 can for example comprise a rest surface 495 able to receive the mould 500 with the forming cavities facing upwards, and a robot (not shown) able to overturn the mould 500 on the rest surface 495, in such a way that the moulding cavities 505 are facing downward, causing the exit of the panels P due to the effects of gravity.

The extracting stations 490 can further comprise an automated conveyor system, for example a conveyor belt 496 that can receive the panels P extracted from the mould 500, move them away from the work line 400 and send them for example to a system for packaging and palletizing (not shown in the figures).

Meanwhile, the empty mould 500 can be repositioned on the conveyor belt system 465, which transfers it to a washing station 497 equipped with means for cleaning the mould 500.

The clean mould 500 is then transferred from the conveyor belt system 465 onto a final automated handling system, in this case a final conveyor belt system 498. This final conveyor belt system 498 can return the mould 500 onto the first conveyor belt system 415, so that it can recommence the manufacturing cycle. With the described work line 400 a continuous production of insulating panels P can be obtained.

Naturally the shape of each panel P will coincide with the shape of the forming cavity 505 of the moulds 500, while the composition thereof will reflect the composition of the initial mixture (M).

Consequently, the amount by weight of polymer in each panel P will be not higher than the overall weight (F) of fibrous material, normally less than 30% of the total weight of the fibrous material.

In particular, the amount by weight of the polymer will preferably be between 5% and 8% of the total weight (F) of the fibrous material, and more preferably about 6%.

On the basis of the initial composition of the mixture (M), each panel P can also optionally contain fireproofing substances (I), as well as traces of graphite (G) and other substances.

By way of example, an insulating panel P obtained with the system described above may have approximately the following composition:

    92% of fibrous material;
    6% of polymer;
    2% of fireproofing material.

The panels P thus-obtained can be applied mainly in the construction industry as heat and sound insulation, for the production of silenced casings, in production of acoustic barriers, for under- flooring for rail transport (trains, trams, subways), etc. An important advantage of these panels P lies also in the fact that the composition thereof originates mostly in recycled material normally destined for destruction (tyres are usually incinerated, with a risk of environmental pollution, and considerable transport costs), and also lies in the fact that the new products in turn are also 100% recyclable.

In particular, the panels P produced in this way can be recycled using the system described at the beginning of the present description, or by placing them in the bin 105 of the grinder device 100 of figure 1, so as to newly separate the plies from the other components of the panel.

Obviously a technical expert of the sector can bring numerous modifications of a technical-applicational nature to what has been described in the foregoing, without forsaking the scope of the invention as claimed in the following.

**Claims**

1. A plant for recycling plies and rubber of tyres, comprising at least a first device (100) which comprises:

   a breaker roller (125) provided with tapered projections (130);
   a casing (115) which can accommodate and clad the breaker roller (125);
   a bin (105) communicating with an internal volume of the casing (115) and loadable with a material containing rubber attached to tyre plies;
   a mobile pusher (140) that can push the material internally of the casing (115) against the breaker roller (125), and
   at least a sieve (150) located vertically below the breaker roller (125).

2. The plant of claim 1, wherein the first device (100) further comprises a shaker roller (145) orientated parallel to the breaker roller (125) and arranged internally of the bin (105) at the upper edge of a passage opening (120) which connects the internal volume of the bin (105) with the internal volume of the casing (115) in which the breaker roller (125) is housed.

3. The plant of any one of the preceding claims, comprising a second device (165) which comprises:

   a casing (170) able to receive the fraction of material retained by the sieve (150) of the first device (100);
   a rotating shaft (180) located internally of the second casing (170) and provided with a plurality of radial blades (185);
   at least a sieve (195, 200) located vertically below the rotating shaft (180).

4. The plant of claim 4, wherein the second device (165) comprises a plurality of blades (190) fixed to the casing (170) and projecting radially internally, each of which is interposed between two consecutive radial blades (185) of the rotating shaft (180).

5. The plant of claim 3 or 4, comprising a third device (220) able to receive the fraction of material which is allowed to pass through the sieves (155, 195, 200) of the first and second devices (100, 165), the third device (220) comprising:

   a plurality of vibrating sieves (225) arranged aligned to one another such that the material advances from one to another in succession, and
   at least a shaker roller (280) interposed between two consecutive sieves of the vibrating sieves (225).

6. The plant of claim 5, wherein the third device (220) comprises aspirating means (265) located above the vibrating sieves (225).

7. The plant of claim 5 or 6, wherein the third device (220) comprises means 270, 275) for blowing jets of air below the vibrating sieves (225).

8. The plant of any one of claims from 5 to 7, comprising a fourth device (285) able to receive the fraction of material allowed to pass through the vibrating sieves (225) of the third device (220) and to subdivide it in different particle sizes.

9. A method for manufacturing products of insulating material (P) comprising steps of:

   preparing a mixture (M) comprising fibrous material and at least a watery suspension of a polymer,
   pouring a batched quantity of the mixture (M) internally of a mould (500) provided with at least a forming cavity (505) having, in negative shape, the shape of the product (P) to be manufactured,
   closing the forming cavity (505) of the mould (500) with a lid (510),
   heating the mixture (M) contained internally of the closed mould (500) such as to cause hardening thereof,
   removing the lid (510) from the mould (500), and
   extracting the product (P) thus obtained from the mould (500).

10. The method of claim 9, comprising a step of subjecting the mixture (M) to a step of pressing internally of the mould (500) before closing the forming cavity (505) with the lid (510).

**11.** The method of claim 9 or 10, comprising the step of subjecting the mixture (M) to a step of pressing internally of the mould (500) after having closed the forming cavity (505) with the lid (510).

**12.** The method of any one of claims from 9 to 11, wherein the step of heating the mixture (M) is obtained by locating the closed mould (500) internally of an oven (455).

**13.** A manufacturing plant of products of insulating material (P), comprising:

means for preparing a mixture (M) comprising fibrous material and at least a watery solution of a polymer, and
a work line (400) comprising a plurality of work stations which include at least:

a loading station (405) provided with means for pouring a batched quantity of the mixture (M) internally of a mould (500) provided with at least a forming cavity (505) having, in negative shape, the form of the product (P) to be manufactured,
a closing station (430) provided with means for closing the forming cavity (505) of the mould (500) with a lid (510),
a firing station (450) provided with means (455) for heating the mixture (M) contained internally of the closed mould (500) so as to cause hardening of the mixture (M),
an opening station (470) provided with means for removing the lid (510) of the mould (500), and
an extracting station (490) provided with means for extracting the product (P) thus obtained from the mould (500).

FIG.1

EP 2 789 443 A2

FIG.2

$\underline{FIG.3}$

$\underline{FIG.4}$

FIG.5

FIG.6

FIG.7

FIG.8

FIG.9